# EUROPÄISCHE PATENTANMELDUNG

(11) **EP 2 520 405 A1**
(43) Veröffentlichungstag der Anmeldung: **07.11.2012**
(21) Anmeldenummer: 12002905.3
(22) Anmeldetag: 26.04.2012
(51) Int. Cl.: B29C 35/06, B29C 37/00, H01B 13/14

(54) **Variable Dichtung für CV-Rohr**

(30) Priorität: 03.05.2011 DE 102011100257
(71) Anmelder: MASCHINENBAU SCHOLZ GMBH & CO. KG, 48653 Coesfeld (DE)
(72) Erfinder: Funke, Frank, 48653 Coesfeld (DE)
(74) Vertreter: Hauck Patent- und Rechtsanwälte

(57) **Zusammenfassung**

Es werden eine Anlage zur kontinuierlichen Kabelherstellung und eine Dichtung für eine derartige Anlage beschrieben. Die Dichtung ist im CV-Rohr der Anlage oder am Ende desselben angeordnet und weist zwei zusammenwirkende, mit ihren Umfängen gegeneinander weisende drehbare Rollen auf, über deren Umfang sich zumindest teilweise jeweils eine sich in Umfangsrichtung kontinuierlich erweiternde und vertiefende Nut erstreckt. Die zusammenwirkenden Nuten beider Rollen bilden in der senkrecht zum CV-Rohr verlaufenden Ebene eine dem Kabelquerschnitt entsprechende Öffnung, deren Größe durch Drehen der Rollen variierbar ist. Auf diese Weise kann die Dichtung ohne großen Aufwand an verschiedene Kabeldurchmesser angepasst werden.

## Beschreibung

Die vorliegende Erfindung betrifft eine Anlage zur kontinuierlichen Kabelherstellung mit einem CV-Rohr mit einem Heizabschnitt und einem Kühlabschnitt sowie einer das im CV-Rohr geführte Kabel umgreifenden Dichtung im CV-Rohr oder am Ende desselben, die dieses in Abschnitte unterteilt oder das CV-Rohr gegenüber der Atmosphäre abdichtet.

Derartige Anlagen sind bekannt. Die sogenannten CV-Rohre (Continuous Vulcanization) sind hierbei relativ lang ausgebildet und können in ihrem Inneren ein Behandlungsmedium, wie beispielsweise Wasserdampf, oder auch kein solches Medium (nur Luft) enthalten. Die CV-Rohre besitzen einen Heizabschnitt und einen nachfolgenden Kühlabschnitt. Im Heizabschnitt finden erhöhte Temperaturen Anwendung, während im nachfolgenden Kühlabschnitt die Temperatur in der Regel nur max. 30-35 °C beträgt. In beiden Abschnitten herrscht ein gegenüber Atmosphärendruck erhöhter Druck, der in der Regel in beiden Abschnitten gleich ist und beispielsweise bei Dampfvulkanisation etwa max. 25 bar und bei Trockenvernetzung etwa max. 16 bar beträgt.

In einem derartigen CV-Rohr oder am Ende desselben, an dem das fertige Kabel aus dem Kühlabschnitt austritt, finden Dichtungen Verwendung, um das CV-Rohr in einzelne Abschnitte zu unterteilen oder dieses am Ende gegenüber der Atmosphäre abzudichten. Solche Dichtungen müssen den Bereich zwischen der Wandung des CV-Rohres und dem im Rohr geführten Kabel abdichten, um den Durchtritt von verschiedenen Medien zwischen den einzelnen Rohrabschnitten zu verhindern, verschiedene Drücke in den einzelnen Rohrabschnitten aufrechtzuerhalten und/oder das Rohr druckdicht gegenüber der Atmosphäre abzuschließen bzw. auch dort den Austritt von Behandlungsmedium zu verhindern. Es versteht sich daher, dass die entsprechende, das Kabel umgreifende Dichtung an den Durchmesser des jeweiligen Kabels angepasst sein muss. Werden mit der gleichen Anlage Kabel mit verschiedenen Durchmessern hergestellt, muss ein entsprechender Austausch der Dichtung erfolgen, was mit einem wesentlichen Umrüstaufwand verbunden ist.

Alle bisher eingesetzten Dichtungssysteme konnten daher immer nur für einen sehr eng begrenzten Kabeldurchmesserbereich eingesetzt werden. Wenn ein Kabel mit einem anderen Durchmesser produziert werden soll, müssen die Einbauten dieser Dichtung passend zum Durchmesser des zu fertigenden Kabels gewechselt werden.

Der vorliegenden Erfindung liegt die Aufgabe zugrunde, eine Anlage der eingangs geschilderten Art zu schaffen, die mit einem besondere geringen Aufwand an verschiedene Kabeldurchmesser anpassbar ist.

Diese Aufgabe wird erfindungsgemäß bei einer Anlage der angegebenen Art dadurch gelöst, dass die Dichtung zwei zusammenwirkende, mit ihren Umfängen gegeneinander weisende, drehbare Rollen aufweist, über deren Umfang sich zumindest teilweise jeweils eine sich in Umfangsrichtung kontinuierlich erweiternde und vertiefende Nut erstreckt, wobei die zusammenwirkenden Nuten beider Rollen in der senkrecht zum CV-Rohr verlaufenden Ebene eine dem Kabelquerschnitt entsprechende Öffnung bilden, deren Größe durch Drehen der Rollen variierbar ist.

Erfindungsgemäß wird somit eine variable Dichtung geschaffen, die an den Durchmesser des jeweiligen zu fertigenden Kabels anpassbar ist. Durch Drehen der beiden Rollen ist der Durchmesser der von der Dichtung gebildeten Öffnung während des Betriebes der Anlage stufenlos verstellbar, und zwar in Anpassung an den Durchmesser des zu fertigenden Kabels. Soll daher ein Kabel mit einem anderen Durchmesser produziert werden, werden beide Rollen synchron gedreht, bis die zusammenwirkenden Nuten beider Rollen in der senkrecht zum CV-Rohr verlaufenden Ebene eine Öffnung bilden, die dem Durchmesser bzw. Querschnitt des neuen zu fertigenden Kabels entspricht. Das Kabel passiert dann diese Öffnung, wobei sichergestellt ist, dass die Kontaktflächen der Rollen bzw. die Wandungen der Nuten das Kabel eng umgreifen und somit die gewünschte Dichtungsfunktion (druckdichte Abdichtung und/oder mediendichte Abdichtung) erfüllen. Durch Drehen der Rollen kann der entsprechende Öffnungsdurchmesser verringert oder vergrößert werden, wenn auf ein Kabel mit anderem Durchmesser übergegangen werden soll.

Es versteht sich, dass die von den beiden Nuten der Rollen gebildete Öffnung an die Form des zu fertigenden Kabels angepasst ist, d.h. in der Regel kreisförmig ausgebildet ist. Dies schließt nicht aus, dass auch andere Querschnittsformen möglich sind.

Vorzugsweise ist die Dichtung in einem die beiden drehbaren Rollen sowie Rohranschlusseinrichtungen aufweisenden Gehäuse ausgebildet. Dieses Gehäuse ist zweckmäßigerweise druckdicht und/oder mediendicht ausgebildet, damit es die gewünschte Dichtungsfunktion erfüllen kann. Bei den Rohranschlusseinrichtungen kann es sich beispielsweise um einen am Gehäuse angebrachten Rohrflansch oder um zwei am Gehäuse angeordnete Flansche handeln, an den bzw. an die das CV-Rohr oder entsprechende CV-Rohrabschnitte anschließbar sind. Wenn die Dichtung als Enddichtung am Ende des Kühlabschnittes Verwendung findet, weist das Gehäuse vorzugsweise nur einen Rohrflansch zum Anschließen des CV-Rohres auf.

Die Rollen besitzen zweckmäßigerweise zum Drehen einen motorischen Antrieb. Es ist dabei ausreichend, eine Rolle direkt anzutreiben und die andere Rolle über ein Getriebe mit dem Antrieb zu verbinden, um ein synchrones Drehen beider Rollen zu erreichen. Beispielsweise kann daher der Antrieb als Direktantrieb für die eine Rolle ausgebildet sein, der über ein Getriebe die andere Rolle synchron antreibt.

Vorzugsweise sind die beiden Rollen liegend angeordnet und weisen zweckmäßigerweise eine senkrechte Antriebswelle auf, wobei die eine Antriebswelle die Welle des Direktantriebes sein kann, während die andere Antriebswelle über ein Getriebe angetrieben wird. Wenn die Dichtung in einem Gehäuse angeordnet ist, können die entsprechenden Antriebswellen sowie das Getriebe ebenfalls im Gehäuse untergebracht sein, wobei ein beispielsweise auf der Gehäuseoberseite angeordneter Elektromotor den entsprechenden Antrieb bilden kann.

Bei einer besonders bevorzugten Ausführungsform der Erfindung besitzt die Anlage eine Steuereinheit, die die von den Rollen gebildete Öffnung in Abhängigkeit vom Kabeldurchmesser einstellt. Beispielsweise kann durch manuelle Eingabe des Kabeldurchmessers in die Steuereinheit diese so programmiert werden, dass sie die beiden Rollen der Dichtung so weit dreht, bis diese eine Kabeldurchtrittsöffnung mit dem gewünschten Durchmesser bilden. Der gewünschte Durchmesser passend zu dem zu fertigenden Kabel kann dabei per Potentiometer eingestellt werden, wobei der vorgesehene Antrieb (Elektromotor) die Drehung bzw. Verstellung der Rollen ausführt.

Damit die Dichtung eng am zu fertigenden Kabel anliegt und auch auf Verdickungen oder Vertiefungen im Kabel reagieren kann, bestehen die die Öffnung bildenden Kontaktflächen der beiden Rollen bzw. die Wandungen der Nuten vorzugsweise aus flexiblem Material. Entsprechende Dichtungsmaterialien, beispielsweise geeignete Elastomere, sind dem Fachmann bekannt.

Die vorliegende Erfindung betrifft ferner eine Dichtung für eine vorstehend beschriebene Anlage. Die Dichtung ist dadurch gekennzeichnet, dass sie zwei zusammenwirkende, mit ihren Umfängen gegeneinander weisende, drehbare Rollen aufweist, über deren Umfang sich zumindest teilweise jeweils eine sich in Umfangsrichtung kontinuierlich erweiternde und vertiefende Nut erstreckt, wobei die zusammenwirkenden Nuten beider Rollen in einer senkrecht zum CV-Rohr verlaufenden Ebene eine dem Kabelquerschnitt entsprechende Öffnung bilden, deren Größe durch Drehen der Rollen variierbar ist.

Weiterbildungen dieser Dichtung gehen aus den auf die Anlage gerichteten Unteransprüchen hervor.

Die Erfindung wird nachfolgend anhand eines Ausführungsbeispieles in Verbindung mit der Zeichnung im Einzelnen erläutert. Es zeigen:
- Figur 1: eine schematische Draufsicht auf einen Teil einer CV-Anlage mit Enddichtung;
- Figur 2: eine Seitenansicht einer Enddichtung der CV-Anlage, teilweise im Schnitt;
- Figur 3: einen Vertikalschnitt durch die Enddichtung;
- Figur 4: eine räumliche Ansicht der in einem Gehäuse untergebrachten Dichtung;
- Figuren 5a-5f: Ansichten und Schnittdarstellungen der bei der Dichtung verwendeten Rollen.

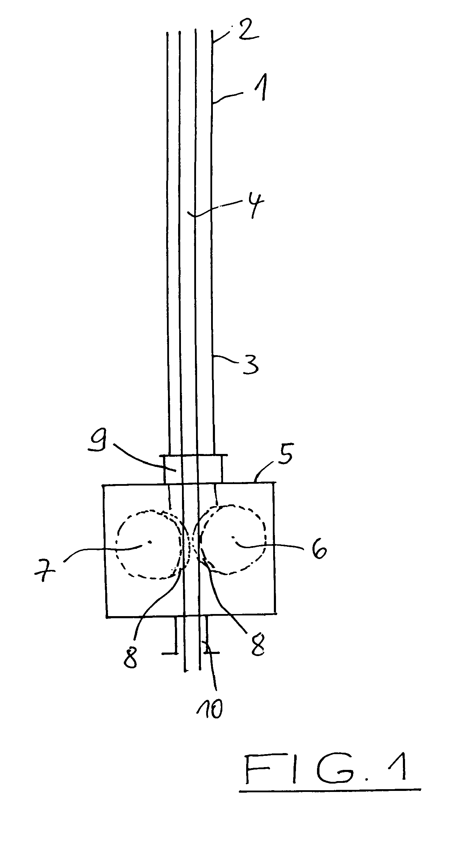

Figur 1 zeigt schematisch in der Draufsicht mit entferntem Gehäusedeckel den Endteil einer CV-Anlage mit Enddichtung. Die Anlage besitzt ein CV-Rohr 1 mit einem Heizabschnitt 2 und einem Kühlabschnitt 3, in dem ein zu vulkanisierendes Kabel 4 geführt ist. Das Innere des CV-Rohres 1 steht unter einem erhöhten Druck von beispielsweise bis max. 25 bar und ist mit Wasserdampf gefüllt.

An das Ende des CV-Rohres 1 ist über eine Flanschverbindung eine Enddichtung angeschlossen, die ein druckdichtes und dampfdichtes Gehäuse 5 aufweist, das über einen Rohrstutzen 9 an das CV-Rohr 1 angeschlossen ist. Im Gehäuse 5 befinden sich zwei Dichtungsrollen 6, 7 mit vertikaler Achse, die drehbar sind. Beide Rollen 6, 7 weisen auf einem Teil ihres Umfanges Nuten 8 auf, die sich in Umfangsrichtung kontinuierlich erweitern und vertiefen. Die zusammenwirkenden Nuten 8 beider Rollen 6, 7 bilden in der senkrecht zum CV-Rohr 1 verlaufenden Ebene eine dem jeweiligen Kabelquerschnitt entsprechende Öffnung, deren Größe durch Drehen der Rollen variierbar ist. Durch synchrones Drehen der Rollen 6, 7 kann daher der Öffnungsquerschnitt in Anpassung an einen bestimmten Kabelquerschnitt variiert werden. Die die Nut 8 umgebenden Wandbereiche der beiden Rollen 6, 7 dichten dabei den Bereich um das Kabel herum bzw. den zwischen Rohrwandungen und Kabel vorhandenen Bereich ab. Das Kabel kann dann aus dem Gehäuse 5 der Enddichtung, ggf. über einen weiteren Rohrstutzen 10, austreten.

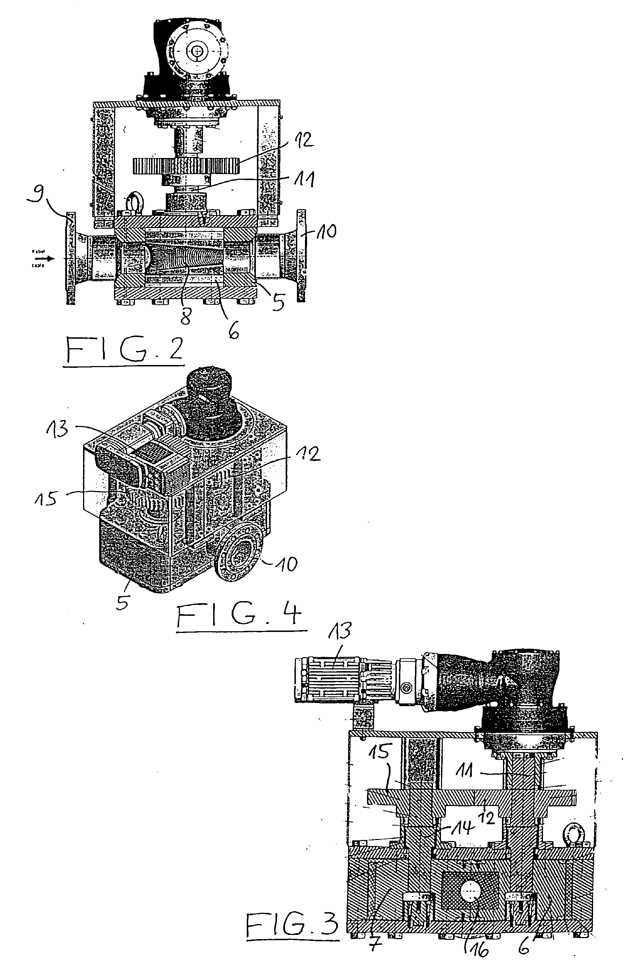

Figur 2 zeigt den genaueren Aufbau der Enddichtung in der Seitenansicht, teilweise im Vertikalschnitt. Man erkennt die beiden Rohrstutzen 9, 10 des Dichtungsgehäuses 5. Es ist eine Dichtungsrolle 6 gezeigt, die auf ihrem Umfang die sich kontinuierlich in Umfangsrichtung erweiternde und vertiefende Nut 8 aufweist. Beispielsweise können mit dieser Dichtung Kabel mit einem Durchmesser von 8-79 mm abgedichtet werden. Die Rolle weist eine vertikal angeordnete Welle 11 auf, die von einem auf der Oberseite des Gehäuses 5 angeordneten Elektromotor angetrieben (gedreht) wird, wenn eine Verstellung des Öffnungsquerschnittes für den Kabeldurchtritt gewünscht wird.

Figur 3 zeigt einen Schnitt durch die Enddichtung in einer um 90° gegenüber Figur 2 versetzten Vertikalebene. Man erkennt, dass die beiden zusammenwirkenden Dichtungsrollen 6, 7 in der sich senkrecht zum CV-Rohr erstreckenden Ebene eine Öffnung 16 für den Kabeldurchtritt bilden. Die Welle 11 der Dichtungsrolle 6 ist mit einem Zahnrad 12 versehen, das mit einem auf einer Welle 14 der benachbarten Rolle 7 angeordneten Zahnrad 15 kämmt. Durch das Drehen der Welle 11 werden daher beide Rollen 6, 7 synchron gedreht. Die Welle 11 wird über den auf der Oberseite des Gehäuses 5 angeordneten Elektromotor 13 angetrieben.

Figur 4 zeigt die Enddichtung in räumlicher Ansicht.

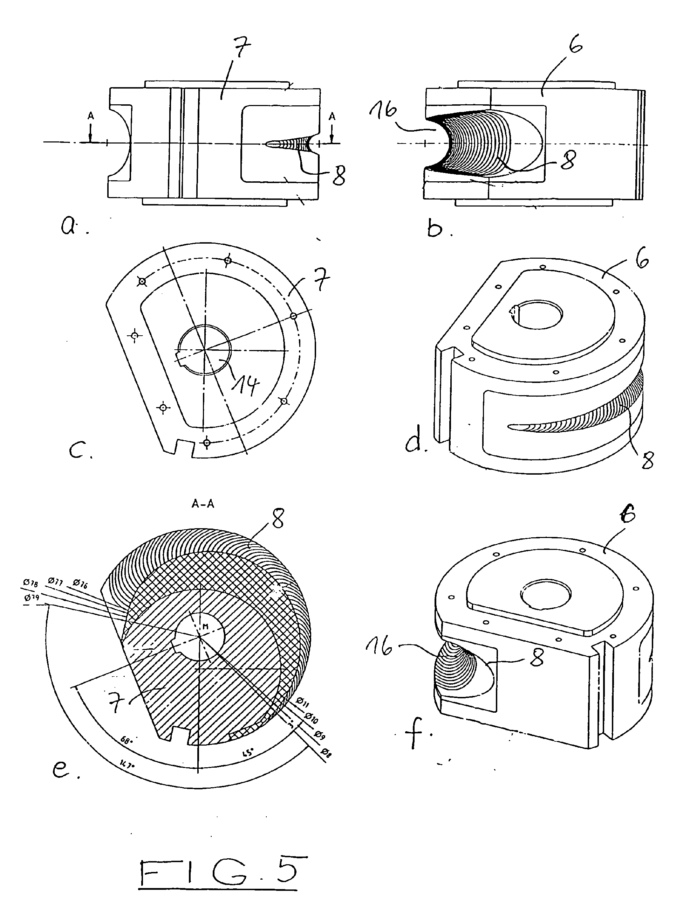

In Figur 5 sind die beiden Dichtungsrollen 6, 7 in Einzeldarstellungen gezeigt. Man erkennt die beiden sich in Umfangsrichtung kontinuierlich erweiternden und vertiefenden Nuten 8, die sich über einen Teil des Umfangs der Rollen 6, 7 erstrecken und in der senkrecht zum CV-Rohr verlaufenden Ebene eine abgedichtete Durchtrittsöffnung 16 für das zu fertigende Kabel bilden. Je nach Drehposition der Rollen 6, 7 wird ein anderer Kabeldurchmesser eingestellt, der bei dem hier gezeigten Ausführungsbeispiel von 8 bis 79 mm reicht. Das die Nuten 8 bzw. die Öffnung 16 umgebende Material der Rollen 6, 7 ist ausreichend flexibel, um eine enge Anpassung an das Kabel zu ermöglichen und sich auch an Verdickungen bzw. Vertiefungen im Kabel anzupassen. Dieses flexible Material kann beispielsweise in eine hierzu vorgesehene Vertiefung der Rollen eingesetzt werden, so dass bei einem Verschleiß ein relativ rascher Austausch möglich ist, ohne die gesamte Rolle austauschen zu müssen.

## Patentansprüche

1. Anlage zur kontinuierlichen Kabelherstellung mit einem CV-Rohr mit einem Heizabschnitt und einem Kühlabschnitt sowie einer das im CV-Rohr geführte Kabel umgreifenden Dichtung im CV-Rohr oder am Ende desselben, die dieses in Abschnitte unterteilt oder das CV-Rohr gegenüber der Atmosphäre abdichtet, **dadurch gekennzeichnet, dass** die Dichtung zwei zusammenwirkende, mit ihren Umfängen gegeneinander weisende, drehbare Rollen (6, 7) aufweist, über deren Umfang sich zumindest teilweise jeweils eine sich in Umfangsrichtung kontinuierlich erweiternde und vertiefende Nut (8) erstreckt, wobei die zusammenwirkenden Nuten (8) beider Rollen (6, 7) in der senkrecht zum CV-Rohr (1) verlaufenden Ebene eine dem Kabelquerschnitt entsprechende Öffnung (16) bilden, deren Größe durch Drehen der Rollen (6, 7) variierbar ist.

2. Anlage nach Anspruch 1, **dadurch gekennzeichnet, dass** die Dichtung in einem die beiden drehbaren Rollen (6, 7) sowie Rohranschlusseinrichtungen aufweisenden Gehäuse (5) ausgebildet ist.

3. Anlage nach Anspruch 1 oder 2, **dadurch gekennzeichnet, dass** die Rollen (6, 7) zum Drehen einen motorischen Antrieb aufweisen.

4. Anlage nach Anspruch 3, **dadurch gekennzeichnet, dass** der Antrieb als Direktantrieb für die eine Rolle (6) ausgebildet ist, der über ein Getriebe die andere Rolle (7) synchron antreibt.

5. Anlage nach einem der vorangehenden Ansprüche, **dadurch gekennzeichnet, dass** die beiden Rollen (6, 7) liegend angeordnet sind und eine senkrechte Antriebswelle (11, 14) aufweisen.

6. Anlage nach einem der vorangehenden Ansprüche, **dadurch gekennzeichnet, dass** sie eine Steuereinheit aufweist, die die von den Rollen (6, 7) gebildete Öffnung (16) in Abhängigkeit vom Kabeldurchmesser einstellt.

7. Anlage nach einem der vorangehenden Ansprüche, **dadurch gekennzeichnet, dass** die die Öffnung (16) bildenden Kontaktflächen der beiden Rollen (6, 7) aus flexiblem Material bestehen.

8. Anlage nach einem der vorangehenden Ansprüche, **dadurch gekennzeichnet, dass** die Rollen (6, 7) Einsätze aufweisen, die aus Dichtungsmaterial bestehen und die Nuten (8) enthalten.

9. Dichtung für eine Anlage nach einem der vorangehenden Ansprüche.
